# FASCICULE DE BREVET EUROPEEN

(11) **EP 0 385 834 B1**
(45) Date de publication et mention de la délivrance du brevet: **05.05.1993**
(21) Numéro de dépôt: 90400502.2
(22) Date de dépôt: 23.02.1990
(51) Int. Cl.: F02K 1/00, B64C 15/02

(54) **Ensemble d'éjection de Turboréacteur à tuyère axisymétrique à section variable et à poussée orientable**
Verstell- und neigbare Schubdüseneinheit für ein Strahltriebwerk
Variable and vectorable nozzle unit for a jet engine

(30) Priorité: 01.03.1989 FR 8902640
(43) Date de publication de la demande: 05.09.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lardellier, Alain Marie Joseph, F-77000 Melun (FR)
(74) Mandataire: Moinat, François

(56) Documents cités:
- EP-A- 0 278 068
- FR-A- 1 153 561
- FR-A- 1 303 806
- FR-A- 2 006 901
- GB-A- 1 139 958
- US-A- 3 912 202
- PATENT ABSTRACTS OF JAPAN vol. 10, no. 105 (M-471)(2162) 19 avril 1986,& JP-A-60 237147 (TOORU FUJI) 26 novembre 1985,

## Description

La présente invention concerne un ensemble d'éjection de turboréacteur composé d'un canal annulaire et d'une tuyère axisymétrique d'éjection, à section variable et à poussée orientable.

Il est déjà connu, notamment pour répondre à des exigences de manoeuvrabilité demandées pour certains avions de prévoir d'équiper leurs turboréacteurs de tuyères d'éjection qui, en plus d'une fonction de réglage de section s'adaptant aux variations des conditions de fonctionnement, notamment les débits et les pressions de gaz, sont dotées d'une fonction d'orientation du flux de sortie de la tuyère et par conséquence de variation de la direction de la poussée obtenue.

Par exemple, FR-A-2 608 680 a décrit une tuyère bidimensionnelle à convergent et divergent, de section réglable dont le système de commande permet en outre d'obtenir une déviation du jet hors de l'axe de symétrie de la tuyère.

Par ailleurs, on connaît également des tuyères d'éjection axisymétriques, constituées notamment de volets disposés en couronnes périphériques et associés à un dispositif qui permet leur pivotement de manière à obtenir une orientation de la poussée. Des exemples de ces tuyères orientables sont notamment décrits par FR-A-2 470 253 et FR-A-2 501 786.

Dans des applications pour lesquelles la solution de tuyère axisymétrique est avantageuse, l'invention vise à réduire les masses et les encombrements par rapport aux solutions connues de tuyère orientable à rotule dans lesquelles toute la partie arrière, y compris les volets et leur système de commande à vérins, doit pivoter et vise ainsi à remplir les fonctions recherchées, à la fois de réglage de section et d'orientation de poussée, tout en faisant appel à un ensemble de tuyère qui présente des qualités de légèreté et de simplicité de construction.

Les résultats avantageux recherchés sont obtenus, grâce à l'invention, au moyen d'un ensemble d'éjection de turboréacteur caractérisé en ce qu'il comporte un corps central constitué de deux élements creux de révolution coaxiaux qui sont reliés l'un à l'autre par des bras de support et fixé sur le canal au moyen de deux supports associés respectivement chacun à une articulation à rotule dont le centre est situé dans un plan horizontal passant par l'axe longitudinal du turboréacteur qui est perpendiculaire à l'axe géométrique de pivotement ainsi formé, et en ce que ledit corps central est associé à un dispositif de commande qui assure son pivotement autour desdites articulations à rotule.

Diverses dispositions avantageuses sont adjointes, concernant notamment le corps central de l'ensemble d'éjection et son dispositif de commande.

D'autres caractéristiques et avantages de l'invention seront mieux compris à la lecture de la description qui va suivre d'un mode de réalisation de l'invention, en référence aux dessins annexés sur lesquels :
- la figure 1 représente une vue schématique en coupe par un plan passant par l'axe longitudinal du turboréacteur d'un ensemble d'éjection conforme à l'invention, représenté dans la demi-vue supérieure dans la configuration correspondant à un fonctionnement du turboréacteur en pleins gaz avec la post-combustion allumée et dans la demi-vue inférieure dans la configuration correspondant à un fonctionnement du turboréacteur en pleins gaz, en moteur sec ;
- la figure 2 représente, selon une vue analogue à celle de la figure 1, l'ensemble d'éjection de turboréacteur représenté à la figure 1, dans une configuration correspondant à une déviation du jet permettant une orientation de la poussée ;
- la figure 3 représente une vue schématique partielle, en bout, de l'arrière, de l'ensemble d'éjection représenté sur la figure 1 ;
- la figure 4 montre, selon une vue schématique partielle éclatée, en perspective, les trois sous-ensembles principaux constituant l'ensemble d'éjection représenté sur les figures 1 à 3 ;
- la figure 5 montre une vue schématique partielle en perspective de l'ensemble d'éjection de turboréacteur représenté sur la figure 1 ;
- la figure 6 représente un détail agrandi de la partie externe de l'ensemble d'éjection de turboréacteur représenté sur la figure 1, dans la configuration selon la demi-vue supérieure de la figure 1.

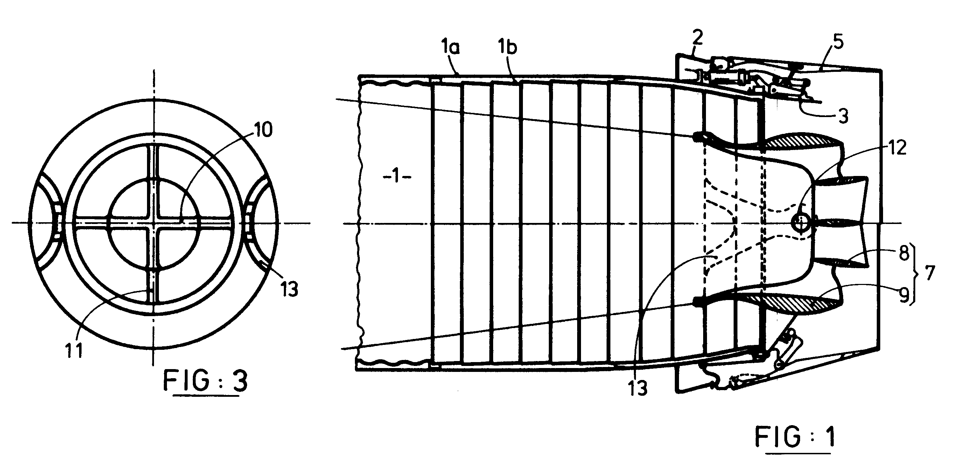

Un ensemble d'éjection de turboréacteur, selon un mode de réalisation de l'invention, représenté sur les figures 1 à 3, se compose d'un canal 1 d'éjection annulaire qui prolonge vers l'arrière l'extrémité aval d'un turboréacteur d'un type connu et qui n'est pas représenté plus en détails sur les dessins. De manière connue, ledit canal 1 comporte une partie externe 1a qui peut être monobloc et une partie interne 1b coaxiale constituant une chemise de protection thermique et qui peut être formée d'un assemblage d'éléments jointifs longitudinalement juxtaposés. L'ensemble d'éjection est complété à l'arrière - avant et arrière ou amont et aval sont utilisés dans leur définition correspondant au sens normal de circulation des gaz dans l'ensemble de propulsion constitué par le turboréacteur et l'ensemble d'éjection associé qui fait l'objet de la présente invention - par une enveloppe externe 2 qui vient se raccorder au culot de nacelle de l'avion lors du montage sur l'avion. De manière également connue en soi, le canal 1 se termine à son extrémité aval par un ensemble annulaire de volets 3 mobiles en pivotement autour d'une articulation, à leur bord amont, solidaire dudit canal 1. Comme représenté plus en détails sur la figure 6, le pivotement desdits volets 3, dits volets chauds parce qu'ils sont en contact avec les gaz chauds circulant dans le canal 1 d'éjection, est commandé par des vérins 4 également fixés sur ledit canal 1. Ladite enveloppe externe 2 comporte un ensemble annulaire coaxial de volets 5 mobiles également en pivotement autour d'une articulation qui relie leur bord amont à la strucutre fixe. Le pivotement desdits volets 5, dits volets froids parce qu'ils sont en contact avec de l'air de refroidissement circulant entre le canal 1 et l'enveloppe externe 2, est obtenu par le moyen de biellettes 6 reliant chaque volet froid 5 à un volet chaud 3 dont il accompagne ainsi le mouvement.

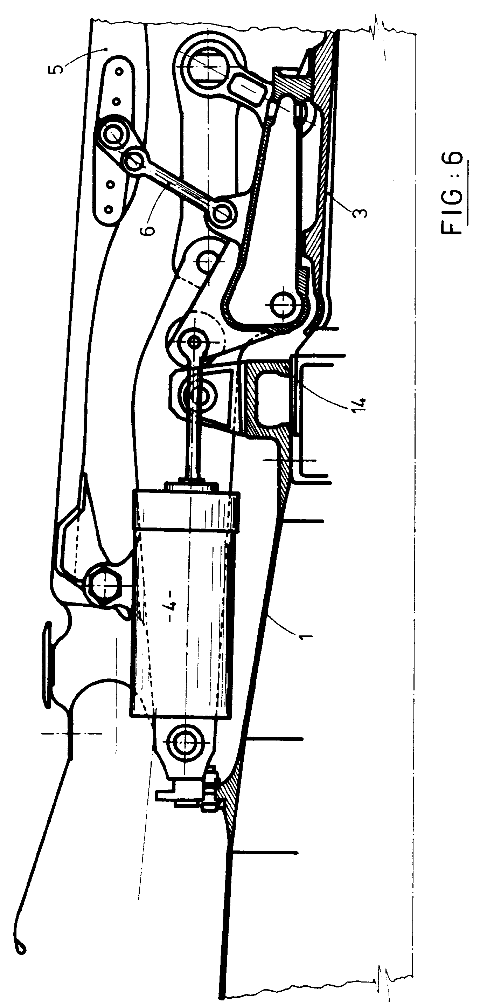

De manière remarquable conforme à l'invention, à l'intérieur du canal 1 et de l'enveloppe externe 2 est disposé un corps central 7 constitué de deux éléments creux de révolution coaxiaux, respectivement un élément interne 8 et un élément externe 9. Dans le mode de réalisation représenté sur les dessins et comme également visible sur la figure 5, l'élément interne 8 est raidi par quatre bras profilés 10, disposés perpendiculairement et les éléments interne 8 et externe 9 sont réunis par quatre bras profilés intermédiaires 11. Les surfaces des parois respectives internes 8a et 9a et externes 8b et 9b ont un profil tel que les éléments interne 8 et externe 9 forment des convergents prolongés par des divergents, en allant de l'amont vers l'aval. Ladite surface de paroi externe 9b de l'élément externe 9 présente une zone de forme sphérique. Au droit de deux des bras intermédiaires 11 situés dans un plan horizontal passant par l'axe commun du turboréacteur et de l'ensemble d'éjection associé, ladite paroi externe 9b de l'élément externe 9 porte deux articulations 12 formées chacune d'une coupelle qui coopère avec une rotule solidaire de la pointe d'une ferrure support 13 en forme de V couché dont l'extrémité des branches est fixée sur une bride structurale 14 qui est solidaire du canal 1. Le corps central 7 est ainsi susceptible de pivoter autour d'un axe centré sur lesdites articulations 12, cet axe horizontal étant perpendiculaire à l'axe longitudinal commun du turboréacteur et de l'ensemble d'éjection.

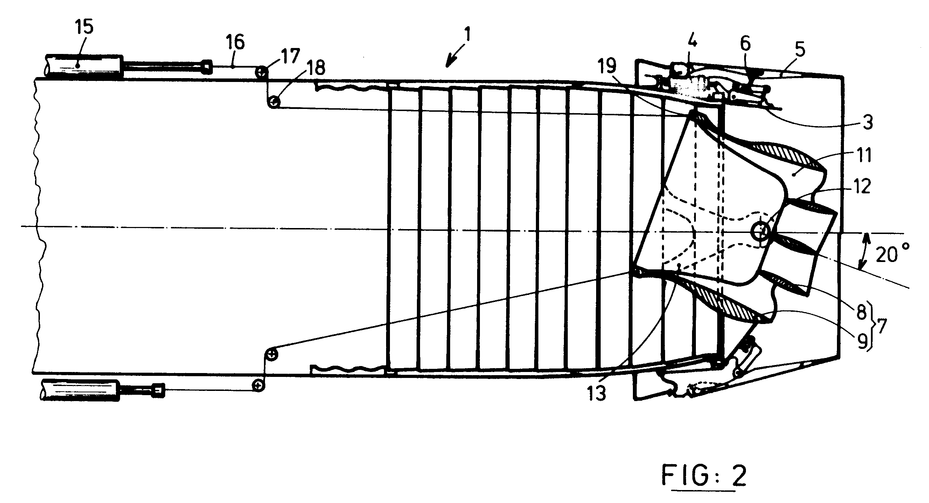

Dans le mode de réalisation représenté sur les dessins et notamment aux figures 2 et 5, le dispositif de commande de l'orientation dudit corps central 7 est constitué par une paire de vérins 15 fixés sur le canal 1 dans la partie amont et reliés par des cables 16 passant sur deux poulies 17 et 18 fixées l'une à l'extérieur du canal 1 et l'autre à l'intérieur du canal 1 à des chapes 19 portées par l'extrémité amont de l'élément externe 9 du corps central 7. Ces éléments du dispositif de commande sont disposés dans un plan vertical passant par l'axe longitudinal commun du turboréacteur et de l'ensemble d'éjection et sont respectivement deux à deux diamétralement opposés sur le canal d'éjection 1.

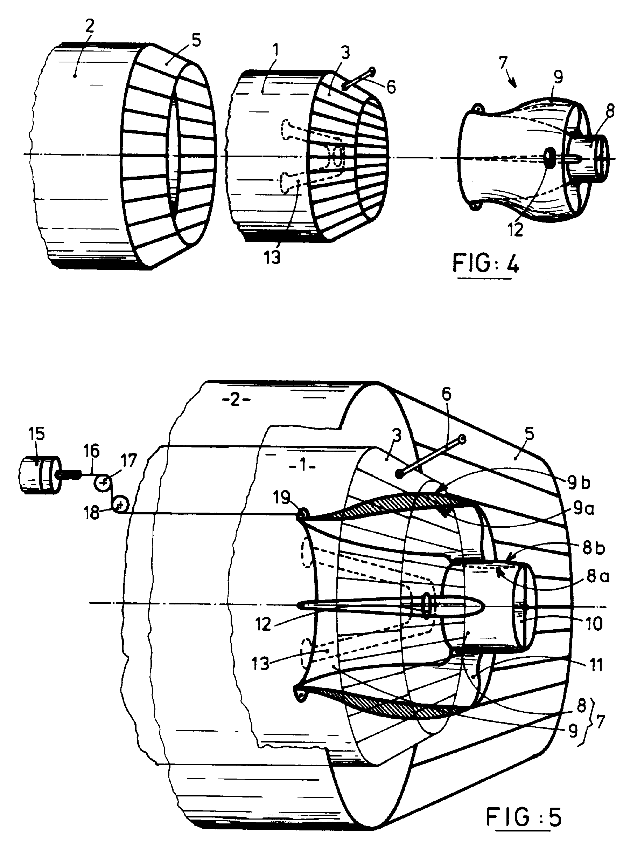

L'ensemble d'éjection de turboréacteur qui vient d'être décrit, notamment en référence aux figures 4 à 6, est susceptible d'adopter diverses configurations dont les figures 1 et 2 représentent des exemples typiques, correspondant à des conditions différentes de fonctionnement de l'ensemble de propulsion constitué par le turboréacteur et ledit ensemble d'éjection associé, selon les conditions d'utilisation de l'avion qui sont fonction des missions demandées. Ainsi dans les deux configurations correspondant aux deux demi-vues représentées sur la figure 1, le corps central 7 présente un axe longitudinal confondu avec l'axe commun longitudinal du turboréacteur et de l'ensemble d'éjection. Ces configurations correspondent notamment à un fonctionnement du turboréacteur en pleins gaz où la poussée s'exerce dans une direction qui est confondue avec ledit axe longitudinal. Selon le mode représenté sur la demi-vue supérieure, les volets chauds 3 de tuyère primaire sont ouverts pour assurer une section maximale de tuyère correspondant à un fonctionnement du turboréacteur avec post-combustion allumée. Par variation de position desdits volets chauds obtenue au moyen des vérins 4 de commande on assure un réglage de ladite section de tuyère, la position des volets externes froids 5 étant ajustée de manière correspondante au moyen des biellettes 6 de liaison. La demi-vue inférieure de la figure 1 représente notamment une position fermée desdits volets chauds 3 permettant d'obtenir une section minimale de tuyère qui correspond à un fonctionnement en plein gaz, moteur sec. Dans cette configuration et de manière remarquable, conforme à l'invention, le bord aval desdits volets chauds 3 de tuyère primaire vient en appui sur la surface extérieure sphérique de la paroi externe 9b de l'élément externe 9 du corps central 7, la ligne de contact entre lesdits volets chauds 3 et ladite paroi externe 9b étant situé dans un plan qui coupe ledit élément externe 9 suivant un grand cercle et qui contient l'axe de pivotement dudit corps central 7 passant par les articulations 12. Une étanchéité suffisante est ainsi assurée entre le corps central 7 et les volets chauds 3 et lorsque l'ensemble d'éjection passe de la configuration en plein gaz, moteur sec à une configuration avec déviation telle que représentée sur la figure 2, le mouvement de pivotement du corps central 7 est rendu possible tout en assurant cette étanchéité, du fait de la forme sphérique de la zone correspondante de la paroi externe 9b de l'élément externe 9 du corps central 7. Dans l'exemple représenté sur la figure 2, la poussée obtenue est ainsi orientée dans une direction qui fait un angle de l'ordre de 20 degrés avec l'axe longitudinal commun du turboréacteur et du canal 1 d'éjection. Un fonctionnement en plein gaz avec la post-combustion allumée et avec déviation du jet peut également être obtenue au moyen d'une configuration de l'ensemble d'éjection non représentée aux dessins dans laquelle les volets chauds 3 de tuyère primaire sont ouverts. Dans l'exemple représenté sur la figure 2, la totalité du jet est déviée lors d'un fonctionnement en plein gaz, moteur-sec et en plein gaz avec post-combustion allumée, on obtient une déviation d'environ 50% du jet principal, cette portion de jet déviée étant susceptible d'augmenter en fonction des applications de l'invention, notamment lorsque le taux de post-combustion diminue.

L'ensemble d'éjection conforme à l'invention qui vient d'être décrit, outre des avantages de légèreté, de simplicité et de moindre encombrement par rapport à des solutions à tuyère bidimensionnelle permettant d'obtenir une déviation équivalente permet d'améliorer les performances de l'avion, notamment au décollage et au combat à faible vitesse, grâce à la déviation du jet en plein gaz sec. La déviation permet également de réduire la traînée par un braquage réduit des gouvernes de l'avion.

Par ailleurs, le profil déterminé pour la définition des bras intermédiaires structuraux 11 du corps central 7 permet d'obtenir une mise automatique du corps central en position de jet direct non dévié en cas de rupture accidentelle d'un élément du dispositif de commande du pivotement du corps central 7.

## Revendications

1. Ensemble d'éjection de turboréacteur composé d'un canal (1) d'éjection annulaire disposé dans le prolongement aval du turboréacteur et d'une tuyère axisymétrique d'éjection comportant notamment :
- un ensemble annulaire de volets mobiles (3), dits chauds, ayant chacun son bord amont articulé sur l'extrémité aval dudit canal (1),
- une pluralité de vérins (4) fixés sur ledit canal (1) et reliés auxdits volets chauds (3) dont ils assurent la position réglable par pivotement autour de leur articulation,
- un ensemble annulaire de volets mobiles (5), dits froids, ayant chacun son bord amont articulé sur l'extrémité aval d'une enveloppe externe (2),
- une pluralité de biellettes (6) reliant respectivement chacune un volet chaud (3) à un volet froid (5) dont ladite biellette (6) assure le pivotement,
caractérisé en ce qu'il comporte en outre un corps central (7) constitué de deux éléments creux (8, 9) de révolution coaxiaux qui sont reliés, l'un à l'autre, par des bras de support (11) et fixé sur ledit canal (1) au moyen de deux supports (13) associés respectivement chacun à une articulation à rotule (12) dont le centre est situé dans un plan horizontal passant par l'axe longitudinal du turboréacteur qui est perpendiculaire à l'axe géométrique de pivotement ainsi formé, et en ce que ledit corps central (7)est associé à un dispositif de commande qui assure son pivotement autour desdites articulations à rotule.

2. Ensemble d'éjection de turboréacteur selon la revendication 1 dans lequel ledit élément externe (9) du corps central (7) a sur sa paroi externe (9b) une zone de surface extérieure sphérique sur laquelle sont susceptibles de venir en appui les bords aval desdits volets chauds (3), les points de contact étant situés dans un plan passant par l'axe de pivotement dudit corps central (7) et coupant ladite surface sphérique suivant un grand cercle.

3. Ensemble d'éjection de turboréacteur selon l'une des revendications 1 ou 2 dans lequel l'élément interne (8) du corps central est supporté par l'élément externe (9) au moyen de quatre bras profilés (11) et est raidi par quatre bras profilés (10) formant une section cruciforme suivant un plan perpendiculaire à l'axe longitudinal dudit corps central.

4. Ensemble d'éjection de turboréacteur selon l'une quelconque des revendications 1 à 3 dans lequel les supports de fixation dudit corps central sont constitués par deux ferrures (13) en forme de V couché dont les pointes portent deux rotules coopérant avec deux coupelles solidaires de la surface externe dudit élément externe de corps central pour former lesdites articulations (12) et dont les branches sont fixées sur une bride structurale (14) dudit canal.

5. Ensemble d'éjection de turboréacteur selon l'une quelconque des revendications 1 à 4 dans lequel le dispositif de commande du pivotement dudit corps central (7), comporte deux chapes (19) disposées sur le bord amont dudit élément externe (9) de corps central (7), deux paires de poulies (17, 18) fixées respectivement l'une à l'intérieur du canal (1) et l'autre à l'extérieur du canal (1) et deux vérins (15) de commande, un cable (16) reliant l'extrémité de la tige de vérin (15) à ladite chape (19) du corps central (7) par l'intermédiaire des poulies (17, 18) et tous ces éléments étant disposés dans un plan vertical passant par l'axe du turboréacteur et étant deux à deux respectivement diamétralement opposés.

## Patentansprüche

1. Schubdüseneinheit für ein Turboluftstrahltriebwerk mit einem in der stromabwärtigen Verlängerung des Turboluftstrahltriebwerks angeordneten ringförmigen Auswurfkanal (1) und einer achsensymmetrischen Schubdüse, namentlich bestehend aus
- einer ringförmigen Gruppe von als heiße Klappen bezeichneten beweglichen Klappen (3), die jeweils mit ihrem stromaufwärtigen Rand an dem stromabwärtigen Endbereich des Kanals (1) angelenkt ist,
- einer Mehrzahl von an dem genannten Kanal (1) befestigten Hubzylindern (4), die mit den heißen Klappen (3) verbunden sind, deren Position mit ihrer Hilfe durch Verschwenken um ihre Gelenkachse verstellbar ist,
- einer ringförmigen Gruppe von als kalte Klappen bezeichneten beweglichen Klappen (5), die jeweils mit ihrem stromaufwärtigen Rand an dem stromabwärtigen Endbereich eines äußeren Mantels (2) angelenkt ist, und
- einer Mehrzahl von Gelenkhebeln (6), von denen jeder jeweils eine heiße Klappe (3) mit einer kalten Klappe (5) verbindet, deren Verschwenkung durch diesen Gelenkhebel (6) bewirkt wird,
**dadurch gekennzeichnet,**
daß ein zentraler Körper (7) vorgesehen ist, der aus zwei hohlen koaxialen als Drehteile ausgebildeten Elementen (8, 9) besteht, die durch Tragarme (11) miteinander verbunden und an dem Kanal (1) mit Hilfe zweier Träger (13) befestigt sind, denen jeweils ein Kugelgelenk (12) zugeordnet ist, dessen Zentrum in einer horizontalen Ebene liegt, die durch die Längsachse des Turboluftstrahltriebwerks verläuft, die mit der so gebildeten geometrischen Schwenkachse einen rechten Winkel bildet,
und daß dem zentralen Körper (7) eine Antriebsvorrichtung zugeordnet ist, die seine Verschwenkung um die genannten Kugelgelenke bewirkt.

2. Schubdüseneinheit für ein Turboluftstrahltriebwerk nach Anspruch 1, bei der das äußere Element (9) des zentralen Körpers (7) auf seiner Außenwand (9b) eine Zone mit sphärischer Außenfläche besitzt, auf der sich die stromabwärtigen Ränder der heißen Klappen (3) abstützen können, wobei die Berührungspunkte in einer Ebene liegen, die durch die Schwenkachse des zentralen Körpers verläuft und die genannte sphärische Fläche in einem Großkreis schneidet.

3. Schubdüseneinheit für ein Turboluftstrahltriebwerk nach einem der Ansprüche 1 oder 2, bei der das innere Element (8) des zentralen Körpers (7) von dem äußeren Element (9) mit Hilfe von vier Profilarmen (11) getragen und von vier Profilarmen (10) verstärkt wird, die in einer zur Längsachse des zentralen Körpers (7) senkrechten Ebene einen kreuzförmigen Querschnitt bilden.

4. Schubdüseneinheit für ein Turboluftstrahltriebwerk nach einem der Ansprüche 1 bis 3, bei der die Träger zur Befestigung des zentralen Körpers aus zwei Beschlagteilen (13) in Form eines liegenden V bestehen, die an ihren Spitzen zwei Kugelköpfe tragen, die zusammen mit zwei mit der Außenfläche des äußeren Elements des zentralen Körpers fest verbundenen Schalen die genannten Kugelgelenke (12) bilden, wobei die Schenkel der V-förmigen Beschlagteile an einem konstruktiven Flansch (14) des Kanals befestigt sind.

5. Schubdüseneinheit für ein Turboluftstrahltriebwerk nach einem der Ansprüche 1 bis 4, bei der die Antriebsvorrichtung für die Schwenkbewegung des zentralen Körpers (7) folgende Elemente aufweist: zwei Gabelbügel (19), die an dem stromaufwärtigen Rand des äußeren Elements (9) des zentralen Körpers (7) angeordnet sind, zwei Paare von Seilrollen (17, 18), von denen die eine im Innern des Kanals (1) und die andere außerhalb des Kanals (1) befestigt ist, sowie zwei Antriebszylinder (15), wobei ein Seil (16) das Ende der Kolbenstange des Antriebszylinders (15) über die Seilrollen (17, 18) mit dem Gabelbügel (19) des zentralen Körpers (7) verbindet und alle diese Elemente jeweils paarweise diametral einander gegenüberliegend in einer Ebene angeordnet sind, die durch die Achse des Turboluftstrahltriebwerks verläuft.

## Claims

1. Turbojet tailpipe assembly composed of an annular duct (1) placed in the downstream extension of the turbojet engine and an axi-symmetrical tailpipe comprising notably:
- an annular set of movable shutters (3), called hot shutters, each having its upstream edge articulated on the downstream end of the said duct (1),
- a plurality of rams (4) fixed to the said duct (1) and connected to the said hot shutters (3) to ensure that they can take up an adjustable position by pivoting about their articulation,
- an annular set of movable shutters (5), called cold shutters, each having its upstream edge articulated on the downstream edge of an outer skin (2),
- a plurality of connecting links (6) connecting respectively each hot shutter (3) to a cold shutter (5) the pivoting of which is ensured by the said connecting link (6),
characterised in that it comprises in addition a central body (7) made up of two circular hollow coaxial elements (8, 9) which are interconnected by supporting struts (11) and fixed to the said duct (1) by means of two brackets (13) each associated respectively with a ball and socket articulation (12) whose centre is situated in a horizontal plane passing through the longitudinal axis of the turbojet engine which is perpendicular to the geometrical pivoting axis thus formed, and in that the said central body (7) is associated with a control device which ensures its pivoting about the said ball joints.

2. Turbojet engine tailpipe assembly in accordance with Claim 1 in which the said outer element (9) of the central body (7) has on its outer wall (9b) a spherical area on its outer surface onto which may come into contact the downstream edges of the said hot shutters (3), the points of contact being situated in a plane passing through the pivoting axis of the said central body (7) and intersecting the said spherical surface in accordance with a great circle.

3. Turbojet engine tailpipe assembly in accordance with either of Claims 1 or 2 in which the inner element (8) of the central body is supported by the outer element (9) by means of four profiled struts (11) and is stiffened by four profiled struts (10) forming a cruciform structure in a plane perpendicular to the horizontal axis of the said central body.

4. Turbojet engine tailpipe assembly in accordance with any of Claims 1 to 3 in which the brackets for fixing the said central body are made up of two horizontal V-shaped brackets (13) whose tips carry two balls joints operating in conjunction with two sockets fixed to the outer surface of the said outer element of the central body to form the said articulations (12) and whose arms are fixed to a structural flange (14) of the said duct.

5. Turbojet engine tailpipe assembly in accordance with any one of Claims 1 to 4 in which the device for controlling the pivoting of the said central body (7) comprises two eyes (19) placed on the upstream edge of the said outer element (9) of the central body (7), two pairs of pulleys (17, 18) fixed respectively one inside the duct (1) and the other outside the duct (1) and two control rams (15), a cable (16) connecting the end of the piston of the ram (15) to the said eye (19) on the central body (7) via the pulleys (17, 18) and all these elements being contained in a vertical plane passing through the axis of the turbojet engine and being side by side respectively diametrically opposite one another.
